# EUROPEAN PATENT APPLICATION

(11) **EP 3 421 301 A1**
(43) Date of publication of application: **02.01.2019**
(21) Application number: 17178005.9
(22) Date of filing: 27.06.2017
(51) Int. Cl.: B60R 21/231, B60R 21/2338, B60R 21/207

(54) **REAR SEAT AIRBAG SYSTEM**

(71) Applicant: Volvo Car Corporation, 40 531 Göteborg (SE)
(72) Inventor: Rosenberg, Mr. Johan, 44332 Lerum (SE); Rutgersson, Sebastian, 41472 Göteborg (SE)
(74) Representative: Valea AB

(57) **Abstract**

The present invention relates to a rear seat airbag system for a restraint system in a vehicle (1) for protection of an occupant (108) in the rear seat of the vehicle in the event of a crash. The system comprises: an inflator unit (109), and an inflatable member (102) for mounting in a back side (106) of a front seat (108) of the vehicle. The inflatable member comprising an upper inflatable portion (114) and a lower inflatable portion (112) interconnected by an inflatable interconnecting portion (116). In an inflated state, the upper portion extends upwards from the interconnecting portion and is configured to provide protection for the occupant from the back side of the front seat, and the lower portion extends from the interconnecting portion and towards the rear of the vehicle to provide protection between the occupant's head (117) and knees (121).

## Description

### Field of the Invention

The present invention generally relates to a rear seat airbag system for a restraint system in a vehicle for protection of an occupant in the rear seat of the vehicle in the event of a collision.

### Background of the Invention

Restraint systems in vehicles have for a long time relied on seat belts as a minimum requirement for the safety of occupants of the vehicle. Seat belts are generally implemented in vehicles both for front seat occupants and for rear seat occupants. Airbag systems have also been employed to complement the seat belts as part of the restraint system in modern vehicles.

Airbag systems have mainly been implemented for protection of the driver and front seat occupant(s) in the event of frontal collisions. More recently, side airbags have also been included in restraint systems for protection of an occupant in case of side impact crashes. However, rear seat occupants most commonly have to rely on seat belts, although lately, rear seat airbags have begun to reach the automobile market.

One example of a rear seat airbag is described in US2017/0036565. The rear seat airbag in US2017/0036565 is located in the front seat to be inflated between the front seat of the vehicle and a passenger in the rear seat of the vehicle. The inclination angle and position of the front seat which accommodates the airbag is adjusted when a high likelihood of a collision is predicted, such that the deployment region for the rear seat airbag is adjusted to a position suitable for protecting the rear seat occupant. However, adjusting the front seat for providing adequate protection in the rear seat appears unnecessarily complicated and requires a means for predicting a collision and ways of quickly moving the position of the front seat before the collision occurs.

Accordingly there is a need for an improved rear seat airbag system for protecting a rear seat occupant in the event of a crash.

### Summary

In view of above, it is an object of the present invention to provide an improved rear seat airbag system. In particular, the rear seat airbag system is adapted for providing protection for an occupant in the rear seat regardless of the position of the front seat in front of the occupant.

According to a first aspect of the invention, there is provided a rear seat airbag system for a restraint system in a vehicle for protection of an occupant in the rear seat of the vehicle in the event of a crash, the rear seat airbag system comprises: an inflator unit; and an inflatable member for mounting in a back side of a front seat of the vehicle, the inflatable member comprising an upper inflatable portion and a lower inflatable portion interconnected by an inflatable interconnecting portion, wherein the inflator unit is configured to inflate the upper inflatable portion, the lower inflatable portion and the inflatable interconnecting portion of the inflatable member in the event of a crash, wherein when the inflatable member is in an inflated state, the upper inflatable portion extends upwards generally from the interconnecting portion and is configured to provide protection for the occupant from the back side of the front seat, and the lower portion extends from the interconnecting portion and towards the rear of the vehicle to provide protection between the occupant's head and knees.

The present invention is based on the realization that a rear seat airbag system benefits from having at least two portions of which one protects the occupant from the front seat and the other one protects the occupant's head from the knees of the occupant. For example, if the front seat is in a front position (towards the front of the vehicle), an occupant in the rear seat behind the front seat may not risk hitting the back of the front seat in the event of a crash since the front seat is too far away. Instead, the occupant may risk colliding with his/her head against his/her knees, in which case airbag protection between the head and knees of the occupant is desirable. The protection between the head and knees is provided by the lower inflatable portion which may cover the occupant's knees in the inflatable state.

On the contrary, if the front seat is in a back position closer to the occupant in the rear seat compared to when the front seat is in the front position, the occupant in the rear seat may risk hitting the back side of the front seat with his/her head in the event of a crash. The back side of the front seat may for example comprise hard trim parts such as head rest or hardback, etc. In such case, airbag protection between the head and the front seat is desirable and is provided by the upper inflatable portion which in the inflatable state covers at least part of the back side of the front seat.

Accordingly, the invention provides the advantage of being able to protect the occupant's head from imparting with the front seat and with the knees of the occupant regardless of the front seat position. This advantage is provided by the inflatable member comprising an upper inflatable portion which in an inflatable state deploys in the space between the occupants head and the front seat in front of the occupant, and a lower inflatable portion which in the inflated state deploys in the space between the occupant's knees and head, i.e. in the lap of the occupant.

A further advantage of the invention is that due to that the inflatable member comprises the two portions which are special tailored to protect the occupants head from specific potentially hazardous elements (e.g. knees and/or front seat), the size of the inflatable member may be kept relatively small compared to using a large inflatable member to fill the entire space in front of the occupant and behind the front seat.

The inflator unit is configured to inflate the inflatable member with a gas at the time of a vehicle collision. The inflator unit is controlled by an electrical control unit (ECU) in the vehicle, the ECU being configured to monitor sensors (e.g. accelerometers, impact sensors, pressure sensor, wheel speed sensors, gyroscopes, etc.) suitable for determining that a collision occurred. The inflator unit comprises a pressurized gas container and an inflation mechanism for rapidly inflating the inflatable member. The inflation mechanism and control of the inflation unit by the vehicle ECU is known *per se* to the skilled person in the art of vehicle restraint systems.

The inflatable member is made from a suitable material such as a fabric which allows the inflatable member to transform from a folded state (i.e. not inflated) to an inflated state. Suitable materials for an inflatable member for a restraint system are know *per se* to the person skilled in the art of restraint systems for vehicles.

In the inflated state the upper inflatable portion may be generally parallel with the back side of the front seat, and the lower inflatable portion may be configured to cover the occupant's knees.

According to an embodiment of the invention, the upper inflatable portion, the lower inflatable portion and the interconnecting inflatable portion are in fluid connection with each other and may be made in one piece to form a single inflatable airbag. In other words, the inflatable member is a one piece airbag which comprises the upper inflatable portion which in an inflated state extends from an interconnecting portion in an upwards direction, and the lower inflatable portion which in an inflated state extends from the interconnecting portion towards the rear of the vehicle, i.e. towards the occupant when in place. The "upwards" direction may be towards a ceiling of the vehicle, or generally parallel with the back rest of the front seat.

The interconnection portion may provide for an angle to be formed between the upper inflatable portion and the lower inflatable portion in the inflated state of the inflatable member. The angle may be in the range of 60º to 120º, such as for example 100º, 90º, 85º, 80º, 75º, 70º, or 65º. The upper inflatable member and the lower inflatable member may have a substantially planar structure each in a respective plane. The angle may be at the intersection between the planes.

The angle between the upper inflatable portion and the lower inflatable portion may advantageously provide for, in the inflated state, a generally L-shaped inflated member. A generally L-shaped inflated member advantageously provides for protection between the occupants head and the front seat, and protection between the occupant's head and knees.

According to embodiments of the invention, an interconnecting panel may be attached to the upper inflatable portion and attached to the lower inflatable portion for maintaining a geometrical relation between the upper inflatable portion and the lower inflatable portion when the inflatable member is in the inflated state. The interconnecting panel in configured to limit the distance between the connection point between the interconnecting panel and the upper inflatable portion and the connection point between the interconnecting panel and the lower inflatable portion to the size of the interconnecting panel. Hereby, the interconnecting panel may provide a restriction for the angle between the upper inflatable portion and the lower inflatable portion in the inflated state such that the angle may be predetermined and adapted for the specific implementation site geometry such as seat sizes, and vehicle model.

Additionally, the interconnecting panel may be arranged such that the interconnecting panel catches the occupants head in the event of a crash. Accordingly, further improved protection for the occupants head is provided by the interconnection panel. The interconnecting panel may be made from a fabric, similar or the same as the inflatable member material. The interconnecting panel may be sewn onto the inflatable member along a transverse direction, i.e. the seems connecting the interconnecting panel with the inflatable member may be in a side-to-side direction (i.e. horizontally) of the vehicle front seat when the inflatable member is in a inflated state.

The interconnecting panel may be connected to a distal end portion of the upper inflatable portion, the distal end portion of the upper inflatable portion being distal from the interconnecting portion, and wherein the interconnecting panel is connected to a distal end portion of the lower inflatable portion, the distal end portion of the lower inflatable portion being distal from the interconnecting portion. This way, the size of the interconnecting panel is relatively large which further improves the capability of the interconnecting panel to provide additional protection for the occupant in the event of a crash. Furthermore, by attaching the interconnecting panel to distal portions of the upper inflatable portion and the lower inflatable portion, the geometrical relation between the upper inflatable portion and the lower inflatable portion is more reliably maintained in the inflated state.

The inflatable member may be an airbag for the restraint system. The airbag may for example be provided as a single airbag having a general L-shape in the inflate state.

According to a second aspect of the invention, there is provided a vehicle comprising a rear seat airbag system according to any one of the abovementioned embodiments.

The inflatable member may be arranged in the back side of a front seat of the vehicle for protecting an occupant in the rear seat in the event of a crash.

This second aspect of the invention provides similar advantages as discussed above in relation to the previous aspect of the invention.

The control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

In summary, the present invention relates to a rear seat airbag system for a restraint system in a vehicle for protection of an occupant in the rear seat of the vehicle in the event of a crash. The system comprises: an inflator unit, and an inflatable member for mounting in a back side of a front seat of the vehicle. The inflatable member comprises an upper inflatable portion and a lower inflatable portion interconnected by an inflatable interconnecting portion. In an inflated state, the upper portion extends upwards from the interconnecting portion and is configured to provide protection for the occupant from the back side of the front seat, and the lower portion extends from the interconnecting portion and towards the rear of the vehicle to provide protection between the occupant's head and knees.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing example embodiments of the invention, wherein:
Fig 1 conceptually illustrates a vehicle comprising a rear seat airbag system;
Fig. 2 conceptually illustrates a vehicle comprising a rear seat airbag system with the inflatable member in an inflated state;
Fig. 3 conceptually illustrates the upper inflatable portion providing protection between the occupant and the front seat according to an embodiment of the invention;
Fig. 4 conceptually illustrates the upper inflatable portion providing protection between the occupant and the front seat according to an embodiment of the invention;
Fig. 5 conceptually illustrates the lower inflatable portion providing protection between the occupant and the occupant's knees according to an embodiment of the invention;
Fig. 6 conceptually illustrates an embodiment of the invention; and
Fig. 7 conceptually illustrates a system according to an embodiment of the invention.

### Detailed Description of Example Embodiments

In the present detailed description, various embodiments of the system according to the present invention are mainly described with reference to a vehicle in the form of a car. However, the present invention may equally be used with other vehicles such as trucks, buses, etc. Thus, this invention may be embodied in many different forms and should not be construed as limited to the embodiments set forth herein; rather, these embodiments are provided for thoroughness and completeness, and fully convey the scope of the invention to the skilled person. Like reference characters refer to like elements throughout.

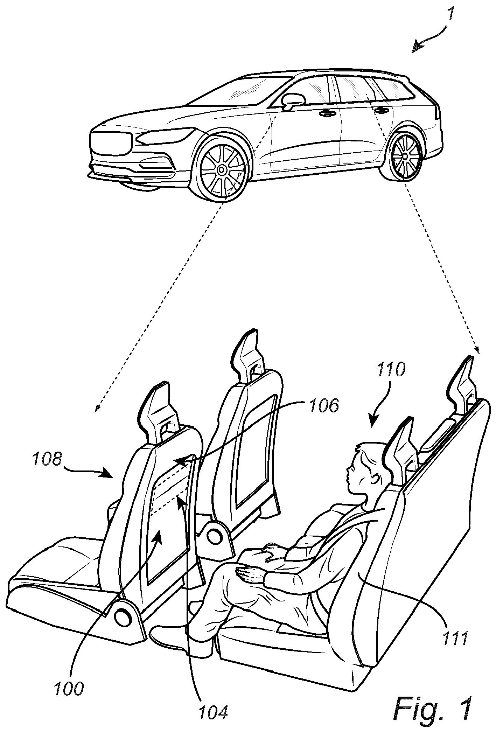

Fig. 1 illustrates a vehicle in the form a car 1 comprising a rear seat airbag system 100. The rear seat airbag system 100 comprises an inflatable member (not shown in fig. 1) which is mounted in a compartment 104 in the back side 106 of a front seat 108 and an inflator unit (not shown in fig. 1). The inflatable member is in Fig. 1 in a folded state and is accommodated in the compartment 104 of the front seat 108. The back side 106 faces the occupant 110 seated in the rear seat 111. The vehicle further comprises an electric control unit (ECU) and sensors (not shown) used for acquiring sensor data which the ECU may analyze in order to determine that a collision occurs. The ECU may trigger the inflator unit to inflate the inflatable member when it has been determined that a collision occurred.

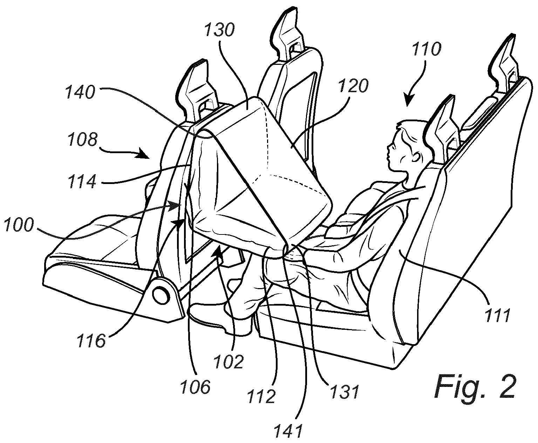

Fig. 2 illustrates the inflatable member 102, e.g. the airbag 102 in an inflated state. The inflatable member 102 comprises an upper inflatable portion 114 and a lower inflatable portion 112, both portions 112, 114 being in an inflated state in fig. 2. The upper inflatable portion 114 is deployed in the space between the occupant's head and the front seat 108 and the lower inflatable portion 112 is deployed in a space covering the knees of the occupant 110 as will be explained in more detail with reference to subsequent drawings.

The upper inflatable portion 114 and the lower inflatable portion 112 are interconnected by an interconnection portion 116. Thus, the upper inflatable 114 portion joins the lower inflatable portion 112 at the interconnection portion 116. The interconnecting portion 116 is generally bent such that upper portion 114 and a lower portion 112 generally extend in different planes in the inflated state. The upper inflatable portion 114 extends upwards from the interconnecting portion in a substantially vertical direction towards a vehicle ceiling (not shown) when in the inflated state. The lower inflatable portion 112 extends substantially horizontally towards the rear of the vehicle from the interconnecting portion 116 in the inflated state. The widths of the upper inflatable portion 114, the interconnecting portion 116, and the lower inflatable portion 112 are substantially similar to the width of the fornt seat. However, the width of the inflatable member 102 may be larger or smaller than the width of the front seat as long as adequate protection for the occupant 110 is provided by the inflatable member 102 .

The lower inflatable portion 112 is adapted to position itself in the lap of the occupant 108 when it is inflated, in other words, the lower inflatable portion 112 adapts its position with respect to the lap (or knees) of the occupant 108. The upper inflatable portion 114, the lower inflatable portion 112, and the interconnection portion 116 are made in one piece to form a single piece airbag 102.

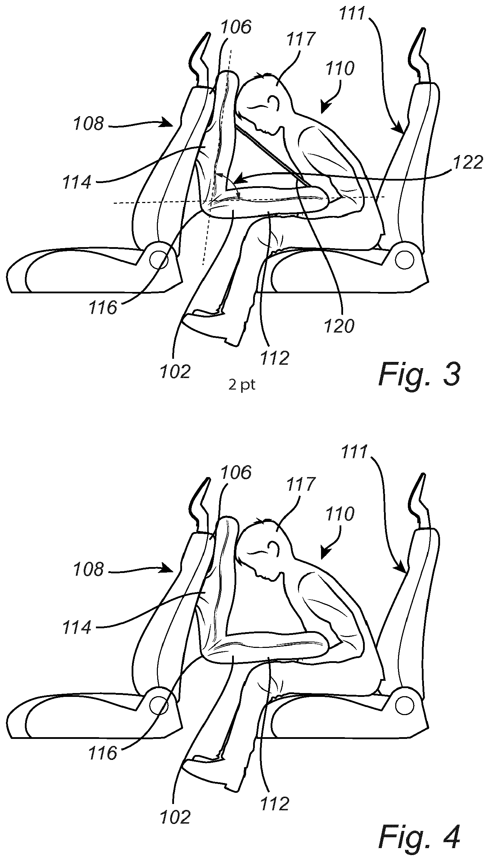

The inflatable member 102 is generally L-shaped in the inflated state. Accordingly, an angle (see e.g. fig. 3) is formed between the upper inflatable portion 114 and the lower inflatable portion 112 at the interconnecting portion 116. The L-shape is provided by the upper inflatable portion 114 and the lower inflatable portion extending in different directions. In order to maintain the L-shape, or another geometrical relation between the upper portion 114 and the lower portion 112, the inflatable member 102 may be suitable attached to the back side 106 of the front seat 108.

Alternatively or additionally, an interconnecting panel 120 is attached to the upper inflatable portion 114 and to the lower inflatable portion 116 such that the inflatable member maintains the general L-shape by the restriction introduced by the interconnecting panel 120. In other words, the interconnecting panel 120 ensures that the inflatable member 102 takes the L-shape when it is inflated. The interconnecting panel 120 limits the distance between the contact points 140 between the interconnecting panel 120 and the upper inflatable portion 114 and the contact point 141 between the interconnecting panel 120 and the lower inflatable portion 116, respectively. The interconnecting panel 120 may also limit the angle 122 (see fig. 3) between the upper inflatable portion 114 and the lower inflatable portion 112.

In fig. 2, the interconnecting panel 120 is connected to a distal end portion 130 of the upper inflatable portion. The distal end portion 130 is distal from the interconnecting portion 116. Additionally, the interconnecting panel 120 is connected to a distal end portion 131 of the lower inflatable portion 112, this distal end portion 131 is also distal from the interconnecting portion 116.

The interconnecting panel 120 may be made from a fabric, for example the same fabric as the inflatable member 102.

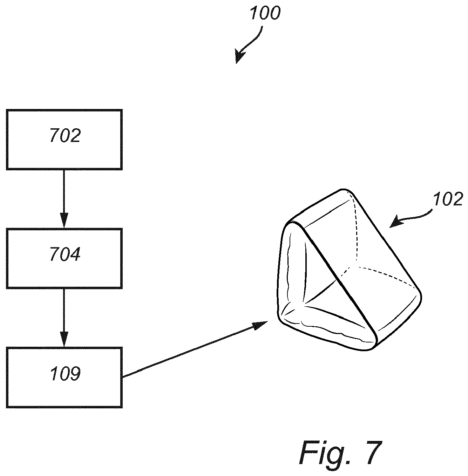

The inflatable member 102 may be arranged to the back side of the 106 of the front seat 108 in various ways which may be know *per se* to the skilled addressee. For example, the inflatable member 102 may be arranged in a housing (e.g. plastic or metal housing) rigidly fastened to the frame of the front seat with e.g. bolts. The housing may further accommodate the inflator unit (see fig. 7) which may comprise mechanism for rapidly inflating the inflatable member with gas held by a tank. The inflatable member 102 may be attached to the housing in such a way that the inflating unit may inflate the inflatable member and such that the inflatable member is not detached when inflated. The tank with the pressurized gas is also accommodated in the housing and is mechanically attached to the housing. It may also be possible to arrange the inflatable member in the back 106 of the front seat 108 without a housing. However, in such case the tank holding the pressurized gas must be rigidly attached to the frame of the front seat such that it is held in place when inflating the inflatable member 102. The inflatable member may then be directly attached to parts of the back side 106 of the front seat 108.

Additionally, the compartment 104 in which the airbag system 100 is arranged has suitable openable portions facing the occupant 110, which openable portions are configured to tear apart under the pressure applied by the inflating inflatable member 102.

Fig. 3 and Fig. 4 schematically illustrate an occupant 110 in the rear seat 111 of a vehicle (not shown). The front seat 108 in which the inflatable member was mounted is in a back position, i.e. relatively close to the occupant 110. Fig. 3 schematically illustrates the occupant as he/she has been thrown forward due to a collision, and the inflator unit has been triggered by the ECU to inflate the inflatable member 102. As shown in the presently illustrated example, the occupant's head 117 is protected from impact with the back side 106 of the front seat 108 by the upper inflatable portion 114 of the generally L-shaped inflatable member 102. As was described with reference to fig. 2, an interconnecting panel 120 also shown in figs. 3 and 5 and 6, maintains the L-shape of the inflatable member 102 when the inflatable member 102 is inflated. The interconnecting panel 120 limits the angle 122 between the upper inflatable portion 114 and the lower inflatable portion 112. In other words, by selecting the size of the interconnecting panel 120, the angle 122 between the upper inflatable portion 114 and the lower inflatable portion 112 can be tuned.

However, the inflatable member may be provided without the interconnecting panel as illustrated in Fig. 4. In such case the inflatable member may be manufactured to be adapted to the L-shape (this may also be the case even when employing the interconnecting panel 120). Furthermore, the inflatable member is deployed in space near the occupant such that the lower inflatable portion 112 lands in the lap of the occupant when the inflatable member 102 is inflated. The upper inflatable portion 114 may be attached to the back side 106 of the front seat 108 such that it extends upwards towards a vehicle ceiling when inflated. Thus, the upper inflatable portion 114 is held in place and ensured to take the appropriate form when inflated by being appropriate attachment of the inflatable member to e.g. an inflator mechanism or a housing arranged in the back side 106 (in a compartment, see fig. 1) of the front seat 108. Furthermore, the upper inflatable portion 114 rests against the back side 106 of the front seat 108 in the inflated state.

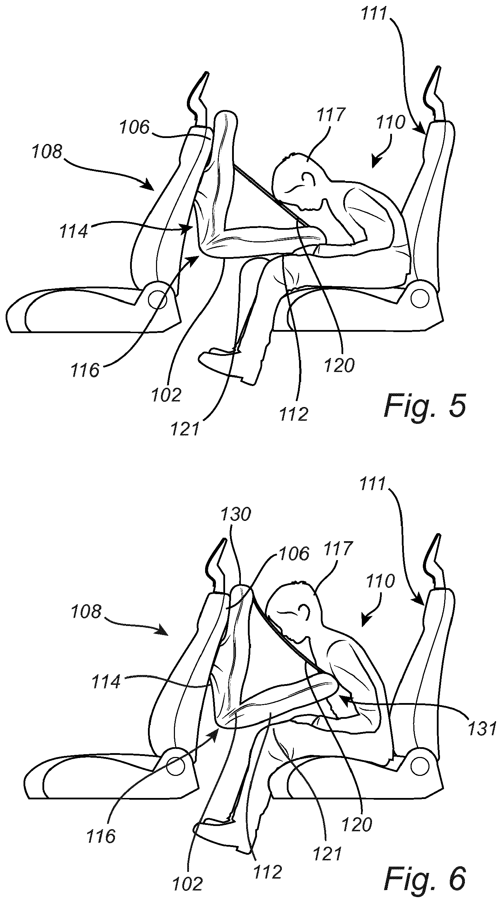

Fig. 5 schematically illustrates an occupant 110 in the rear seat 111 of a vehicle (not shown). The front seat 108 in which the inflatable member was mounted is in a forward position, i.e. relatively far from the occupant 110. Fig. 5 schematically illustrates the occupant as he/she has been thrown forward due to a collision, and the inflator unit has been triggered by the ECU to inflate the inflatable member 102. As shown in the presently illustrated example, the occupant's head 117 is protected from impact with the occupant's knees 121 by the lower inflatable portion 112 of the generally L-shaped inflatable member 102. As was described with reference to fig. 2, an interconnecting panel 120 also shown in figs. 3 and 6, maintains the L-shape of the inflatable member 102 when the inflatable member 102 is inflated.

Fig. 6 conceptually illustrates a further technical advantage of the interconnecting panel 120. In the event of a crash and when the inflatable member 102 is inflated, the interconnecting panel 120 is arranged such that it provides additional protection for the occupant's 110 head. The interconnecting panel is arranged such that it catches the occupant's head before the head hits the inflatable member 102. Further, with the interconnecting panel 120 connected to the distal end portion 130 of the upper inflatable portion 114 and the distal end portion 131 of the lower inflatable portion 112, the interconnecting portion more reliably catches the occupant's head.

Fig. 7 conceptually illustrates a rear seat airbag system according to embodiment of the invention. A vehicle electrical control unit 704 is connected to a set of sensors 702 in the vehicle. The control unit 704 receives data from the sensors 702 and analyses the data to determine whether or not a crash has occurred. If a crash is determined to have occurred, the control unit sends a trigger signal to the inflator unit 109 which comprises a tank holding pressurized gas. The inflator unit 109 rapidly inflates the inflatable member 102 in response to having received the trigger signal from the vehicle control unit 704.

The person skilled in the art realizes that the present invention by no means is limited to the preferred embodiments described above. On the contrary, many modifications and variations are possible within the scope of the appended claims.

In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. Any reference signs in the claims should not be construed as limiting the scope.

## Claims

1. A rear seat airbag system (100) for a restraint system in a vehicle (1) for protection of an occupant (108) in the rear seat of the vehicle in the event of a crash, the rear seat airbag system comprises:
- an inflator unit (109); and
- an inflatable member (102) for mounting in a back side (106) of a front seat (108) of the vehicle, the inflatable member comprising an upper inflatable portion (114) and a lower inflatable portion (112) interconnected by an inflatable interconnecting portion (116),
wherein said inflator unit is configured to inflate said upper inflatable portion, said lower inflatable portion and said inflatable interconnecting portion of said inflatable member in the event of a crash,
wherein when said inflatable member is in an inflated state, said upper inflatable portion extends upwards generally from said interconnecting portion and is configured to provide protection for the occupant from the back side of the front seat, and
said lower portion extends from said interconnecting portion and towards the rear of the vehicle to provide protection between the occupant's head (117) and knees (121).

2. The rear seat airbag system according to claim 1, wherein, in the inflated state:
- said upper inflatable portion is generally parallel with the back side of the front seat, and
- said lower inflatable portion is configured to cover the occupant's knees.

3. The rear seat airbag system according to any one of claim 1 or 2, wherein said upper inflatable portion, said lower inflatable portion and said interconnecting inflatable portion are in fluid connection with each other and are made in one piece to form a single inflatable airbag.

4. The rear seat airbag system according to any one of the preceding claims, wherein, in said inflated state, an angle (122) is formed between said upper inflatable portion and said lower inflatable portion at said interconnecting portion.

5. The rear seat airbag system according to claim 4, wherein said angle is in the range of 60º to 120º**.**

6. The rear seat airbag system according to any one of the preceding claims, wherein when the inflatable member is inflated, the upper inflatable portion and the lower inflatable portion forms a generally L-shaped inflated member.

7. The rear seat airbag system according to any one of the preceding claims, comprising an interconnecting panel (120) attached to the upper inflatable portion and attached to the lower inflatable portion for maintaining a geometrical relation between the upper inflatable portion and the lower inflatable portion when the inflatable member is in the inflated state.

8. The rear seat airbag system according to claim 7, wherein said interconnecting panel is connected to a distal end portion of the upper inflatable portion, the distal end portion being distal from the interconnecting portion, and
wherein said interconnecting panel is connected to a distal end portion of the lower inflatable portion, the distal end portion being distal from the interconnecting portion.

9. The rear seat airbag system according to any one of claims 7 or 8, wherein, in said inflatable state, said interconnecting panel is arranged such that the interconnecting panel catches the occupants head in the event of a crash.

10. The rear seat airbag system according to any one of claims 7 to 9, wherein said interconnecting panel is made from a fabric.

11. The rear seat airbag system according to any one of the preceding claims, wherein the inflatable member is an airbag.

12. The rear seat airbag system according to any one of the preceding claims, comprising a control unit (704) configured to trigger the inflator unit in the event of a collision.

13. A vehicle (1) comprising a rear seat airbag system according to any one of the preceding claims.

14. The vehicle according to claim 13, wherein said vehicle comprises a front seat, wherein said inflatable member is arranged in the back side of said front seat of the vehicle for protecting an occupant in the rear seat behind the front seat in the event of a crash.
